# EUROPÄISCHE PATENTANMELDUNG

(11) **EP 0 976 602 A2**
(43) Veröffentlichungstag der Anmeldung: **02.02.2000**
(21) Anmeldenummer: 99114129.2
(22) Anmeldetag: 19.07.1999
(51) Int. Cl.: B60K 15/077

(54) **Kraftstofftank**

(30) Priorität: 27.07.1998 DE 19833696
(71) Anmelder: Kautex Textron GmbH & Co. KG., 53229 Bonn (DE)
(72) Erfinder: Wagner, Axel, 53225 Bonn-Beuel (DE); Walter, Rüdiger, 53123 Bonn (DE)
(74) Vertreter: Koepsell, Helmut, Dipl.-Ing.

(57) **Zusammenfassung**

Die Erfindung betrifft einen Kraftstofftank (10) für ein Kraftfahrzeug mit einem innerhalb des Kraftstofftanks angeordneten Reservoir (12), dem eine motorisch angetriebene Pumpe (26) zugeordnet ist, mittels welcher der Kraftstoff dem Motor zugeführt wird, und mit einem Füllrohr (60), durch welches der Kraftstoff in den Kraftstofftank einströmt. Das Neue besteht darin, daß das auslaufseitige Ende (68) des Füllrohres (60) und das Reservoir (12) so zueinander angeordnet sind, daß zumindest ein Teil des durch das Füllrohr strömenden Kraftstoffes direkt in das Reservoir geführt wird, welches so ausgebildet ist, daß zumindest der untere Bereich desselben gegenüber dem es umgebenden Innenraum im Kraftstofftank abgeschlossen ist.

## Beschreibung

Die Erfindung betrifft einen Kraftstofftank für ein Kraftfahrzeug gemäß dem Oberbegriff des Anspruchs 1.

Das Reservoir, welches im allgemeinen Teil einer auch die Kraftstoffpumpe enthaltenden Fördereinheit ist, hat insbesondere die Funktion sicherzustellen, daß auch bei ungünstigen Betriebszuständen, also beispielsweise bei längerer Kurvenfahrt oder bei einer von der Horizontalen merklich abweichenden Position des Kraftfahrzeuges, eine ausreichende Kraftstoffmenge sich im Ansaugbereich der Kraftstoffpumpe befindet. Dies setzt das Vorhandensein einer gewissen Mindestmenge an Kraftstoff im Reservoir voraus.

Die im allgemeinen innerhalb des Reservoirs angeordnete elektrische Kraftstoffpumpe kann in bekannter Weise zweistufig ausgeführt sein, wobei die erste Stufe der Pumpe den Kraftstoff aus dem das Reservoir umgebenden Raum des Kraftstofftankes in das Reservoir hineinfördert. Dazu kann das Reservoir in oder nahe seinem Bodenbereich mit einem ggf. verschließbaren Durchlaß versehen sein, durch welchen der Kraftstoff von der ersten Stufe der Pumpe angesaugt werden kann. Die zweite Stufe der Pumpe entnimmt den Kraftstoff dem Reservoir und fördert ihn in Richtung auf den Motor des Kraftwagens. Dabei liefert die zweite Stufe der Kraftstoffpumpe in der Regel kontinuierlich eine Kraftstoffmenge pro Zeiteinheit, die größer ist als die Menge, die dem maximalen Verbrauch des Motors entspricht. Deshalb ist der Kraftstoffpumpe eine Einrichtung zumeist in Form eines Druckreglers nachgeschaltet, in welchem die überschüssige Kraftstoffmenge abgezweigt und in das Reservoir zurückgeführt wird.

Eine andere Möglichkeit besteht darin, daß dem Reservoir lediglich eine einstufige Kraftstoffpumpe zugeordnet ist, die den Kraftstoff aus dem Reservoir ansaugt und in Richtung auf den Motor fördert. Diese Kraftstoffpumpe erfüllt somit lediglich die Funktion der zweiten Stute der vorerwähnten zweistufigen Kraftstoffpumpe. Die Förderung des Kraftstoffes aus dem das Reservoir umgebenden Raum des Tankes in das Reservoir hinein erfolgt dabei z. B. durch eine Saugstrahlpumpe, die durch den Kraftstoffstrom in Betrieb gehalten wird, der im Druckregler als Überschuß abgezweigt und die Rücklaufleitung durchströmt.

Bei beiden vorbeschriebenen Anordnungen und Ausgestaltungen wird beim Füllen des Tanks der Kraftstoff in den das Reservoir umgebenden Raum des Tanks eingeführt. Dies hat den Nachteil, daß insbesondere bei Kraftstoffbehältern mit einer großen Bodenfläche und/oder mit einer komplizierten Geometrie bei leerem Kraftstoffsystem eine größere Kraftstoffmenge in den Tank eingefüllt werden muß, damit Kraftstoff auch in das Reservoir gelangt, um die Kraftstoffversorgung für den Motor in Gang zu setzen. Dies gilt vor allem für die zweite der vorbeschriebenen Ausgestaltungen, da ein effektiver Betrieb der Saugstrahlpumpe eine ausreichende Kraftstoffmenge im Reservoir erfordert, um den für den Betrieb der Saugstrahlpumpe erforderlichen Kraftstoffstrom in der Rückführleitung und der daran angeschlossenen Treibdüse zu erzeugen, wobei im Tankraum außerhalb des Reservoirs auch ausreichend Kraftstoff vorhanden sein muß, wenn durch die Saugstrahlpumpe Kraftstoff in das Reservoir gefördert werden soll.

Die vorbeschriebenen Probleme treten insbesondere bei der Erstbetankung eines Kraftfahrzeugs nach seiner Herstellung auf, für die ein Kraftstoff mit besonderer Qualität verwendet wird, der verhältnismäßig teuer ist. Auch aus diesem Grunde sind die Kraftfahrzeughersteller, bei denen die Erstbetankung erfolgt, bemüht, die Menge dieses Kraftstoffes für die Erstbetankung so klein wie möglich zu halten. Sie kann z. B. in der Größenordnung von 1 bis 3 Litern liegen. In Abhängigkeit von der Ausgestaltung des Tanks sowie des darin angeordneten Reservoirs und auch des Pumpensystems kann jedoch die Notwendigkeit bestehen, eine größere Kraftstoffmenge einzufüllen als für die mit dem Kraftstoff der Erstbetankung am bzw. mit dem Kraftfahrzeug durchgeführten Betriebsvorgänge erforderlich wäre.

Demzufolge liegt der Erfindung die Aufgabe zugrunde, einen Kraftstofftank, z. B. für Benzin oder Diesel, der einleitend beschriebenen Art so auszugestalten, daß auch bei komplizierten und ungünstigen Formen des Tanks unter allen im praktischen Betrieb vorkommenden Bedingungen eine Gewähr dafür gegeben ist, daß für die den Motor versorgende Pumpe auch dann eine ausreichende Kraftstoffmenge verfügbar ist, wenn die insgesamt im Tank vorhandene Kraftstoffmenge sehr gering ist, wie dies beispielsweise bei der Erstbetankung, aber auch z. B. bei der Nachbetankung aus einem Reservekanister der Fall sein kann, nachdem der Tank zuvor im Fahrbetrieb völlig entleert worden war.

Diese Aufgabe wird mit den im Kennzeichen des Anspruches 1 angegebenen Mitteln gelöst. Da bei Anwendung der Lehre gemäß der Erfindung die Befüllung des Kraftstoffbehälters über das darin befindliche Reservoir erfolgt, welches ein wesentlich kleineres Volumen aufweist als der Tank in seiner Gesamtheit, ist in jedem Fall sichergestellt, daß als erstes das Reservoir zumindest teilweise gefüllt wird, so daß bei entsprechender Anordnung der den Motor versorgenden Pumpe, deren Ansaugbereich sich ohnehin im unteren Teil des Reservoirs befindet, auch bei kleinen eingefüllten oder im Reservoir verbleibenden Kraftstoffmengen die Versorgung des Motors mit Kraftstoff gewährleistet ist. Das Erfordernis, das Reservoir zumindest in seinem unteren Bereich so flüssigkeitsdicht auszuführen, daß eine Mindestmenge an Kraftstoff im Reservoir verbleibt, kann durch flüssigkeitsdichte Gestaltung zumindest des unteren Teils des Reservoirs ohne Schwierigkeiten, insbesondere ohne Mehraufwand, erreicht werden.

Das auslaufseitige Ende des Füllrohres kann direkt in das Reservoir einmünden, wozu beispielsweise die Seitenwand des Reservoirs mit einer entsprechenden Verbindung zum Füllrohr versehen ist, durch die im einfachsten Fall das Füllrohr in das Reservoir hineinragt. Es ist natürlich auch möglich, das auslaufseitige Ende des Füllrohres mit der Wandung des Reservoirs zu verbinden, wobei diese Verbindung auch flüssigkeitsdicht sein kann. Das Füllrohr kann aber auch von oben in das Reservoir eingeführt werden, zumal in vielen Fällen das Reservoir oben ohnehin offen ist. Es ist natürlich auch möglich, das auslaufseitige Ende des Füllrohres einfach oberhalb des oben offenen Reservoirs enden zu lassen.

In der Zeichnung sind einige Ausführungsbeispiele der Erfindung dargestellt. Es zeigen:
- Fig. 1: einen Längsschnitt durch eine erste Ausführungsform eines Kraftstofftanks für ein Kraftfahrzeug,
- Fig. 2: eine der Fig. 1 entsprechende Darstellung einer zweiten Ausführungsform,
- Fig. 3: eine der Fig. 1 entsprechende Darstellung einer dritten Ausführungsform.

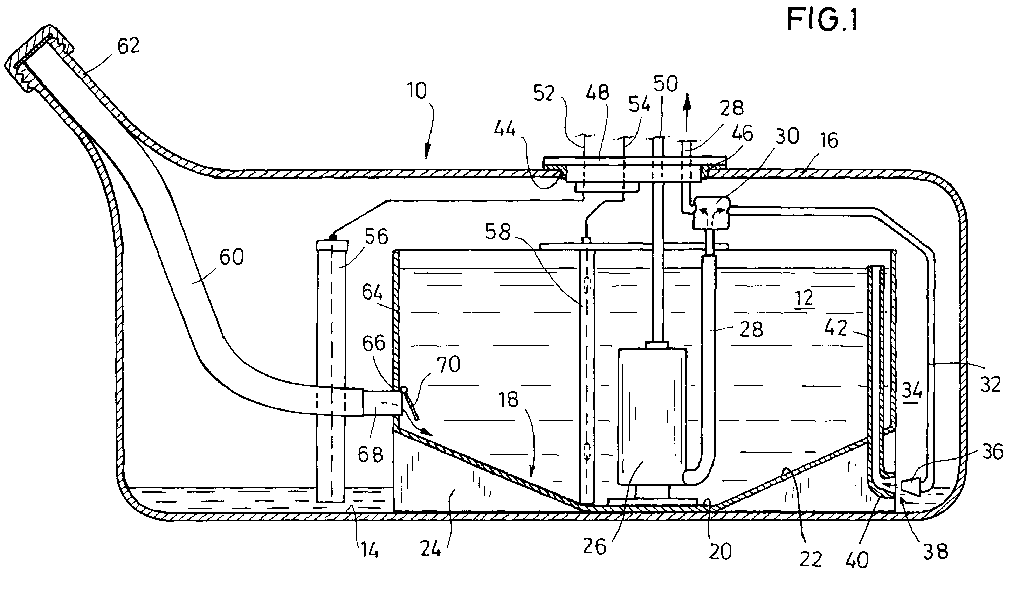

Der in Fig. 1 dargestellte Kraftstofftank 10 kann auf unterschiedliche Weise aus Kunststoff oder Metall hergestellt sein. Er ist mit einem Restmengenbehälter oder Reservoir 12 versehen, der bzw. das ein merklich kleineres Volumen als der Tank 10 in seiner Gesamtheit aufweist und in geeigneter Weise am Boden 14 des Tanks 10 befestigt ist. Das oben offene Reservoir 12 endet in einem Abstand von der oberen Wand 16 des Tanks.

Der Boden 18 ist mit einem mittleren Bereich 20 versehen, der im wesentlichen vertikal zur Längsachse des Reservoirs und parallel zum Boden des Tankes 14 verläuft. Der an den mittleren Bereich 20 anschließende äußere Bereich 22 des Bodens 18 ist zum Umfang de Reservoirs hin ansteigend verlaufend angeordnet, so daß dieser äußere Bereich 18 ausgehend vom mittleren Bereich 20 einen in Richtung auf den Umfang gleichmäßig zunehmenden Abstand vom Boden 14 des Tanks 10 aufweist. Um das Reservoir 12 innerhalb des Tankes 10 mit der notwendigen Stabilität anbringen zu können, ist er unterseitig im äußeren Bodenbereich mit im wesentlichen radialen Rippen 24 versehen, die in Abständen über den Umfang des Reservoirs angeordnet sind und auf dem Boden 14 des Tanks aufliegen.

Innerhalb des Reservoirs 12 ist am mittleren Bereich 20 des Bodens 18 eine einstufige elektrische Kraftstoffpumpe 26 befestigt, an die eine zum Motor führende Leitung 28 angeschlossen ist, in die innerhalb des Tanks 10 in bekannter Weise ein Druckregler 30 eingeschaltet ist, von dem eine Rückführleitung 32 abgeht. Im Druckregler 30 erfolgt die Abzweigung der überschüssigen Kraftstoffmenge, die durch die außerhalb des Reservoirs 12 befindliche Rückführleitung 32 in den das Reservoir 12 umgebenden Raum 34 des Tanks 10 zurückgeführt wird. Am ausströmseitigen Ende ist die Rückführleitung 32 mit einer Treibdüse 36 einer Saugstrahlpumpe 38 versehen, deren Fangdüse 40 das einströmseitige Ende eines Überlaufrohres 42 bildet, wie dies in der Zeichnung dargestellt ist. Das Überlaufrohr ist im wesentlichen vertikal verlaufend angeordnet, mündet in einem geringen Abstand von der oberen Begrenzung des Reservoirs 12 innerhalb desselben und ist flüssigkeitsdicht durch den äußeren Bereich 22 des Bodens hindurchgeführt, dessen Anordnung die Unterbringung der Saugstrahlpumpe 38 im Bereich unterhalb des Reservoirs 12 ermöglicht.

Der Tank ist in seiner oberseitigen Wand 16 mit einer Öffnung 44 versehen, die unter Zwischenschaltung einer Dichtung 46 durch einen Deckel 48 verschlossen ist. Durch diesen Deckel 48 sind die Leitung 28 sowie elektrische Leitungen 50 für die Energieversorgung der Pumpe 26 und elektrische Anschlußleitungen 52 und 54 flüssigkeitsdicht hindurchgeführt. Letztere stellen die Verbindung zwischen jeweils einem Füllstandsmesser 56 bzw. 58 und einer Anzeige od. dergl. her. Der Füllstandsmesser 56 ist in dem das Reservoir 12 umgebenden Raum 34 des Tanks 10, der Füllstandmesser 58 innerhalb des Reservoirs 12 angeordnet. Da das Reservoir 12 im Bodenbereich und zumindest im unteren Bereich der Seitenwandungen gegenüber dem es umgebenden Raum 34 innerhalb des Tankes dicht abgeschlossen ist, besteht die Möglichkeit, beispielsweise in der letzten Phase des Verbrauchs einer Tankfüllung, wenn der Raum 34 weitestgehend entleert ist und somit der noch vorhandene Kraftstoff im wesentlichen sich innerhalb des Reservoirs 12 befindet, die noch vorhandene Kraftstoffmenge durch den Füllstandsmesser 58 zu kontrollieren.

Der Tank 10 ist mit einem Füllrohr 60 versehen, welches sich vom Einfüllstutzen 62 des Tanks in das Reservoir 12 erstreckt, dessen Seitenwandung 64 dazu mit einem Durchgang 66 versehen ist, durch die der Endbereich 68 des Füllrohres flüssigkeitsdicht hindurchgeführt ist. Die Ausströmöffnung des Füllrohres 60 ist durch eine schwenkbar am Endabschnitt 68 angebrachte Klappe 70 verschließbar, die, wenn kein Kraftstoff durch das Füllrohr 60 in das Reservoir strömt, selbsttätig ihre Schließstellung einnimmt und somit verhindert, daß Kraftstoff aus dem Reservoir in das Füllrohr eintritt.

Da der Tank 10 durch das Füllrohr 60, welches im Bereich des Stutzens 62 flüssigkeitsdicht an dessen innerer Begrenzungswandung anliegen kann, betankt wird, fließt die gesamte in den Tank eingeführte Kraftstoffmenge zunächst in das Reservoir 12, so daß dieses auch bei Einfüllen einer kleinen Kraftstoffmenge in jedem Fall soweit gefüllt ist, daß sich ausreichend Kraftstoff im Ansaugbereich der Pumpe 26 befindet, der unmittelbar oberhalb des mittleren Bodenbereiches 20 angeordnet ist.

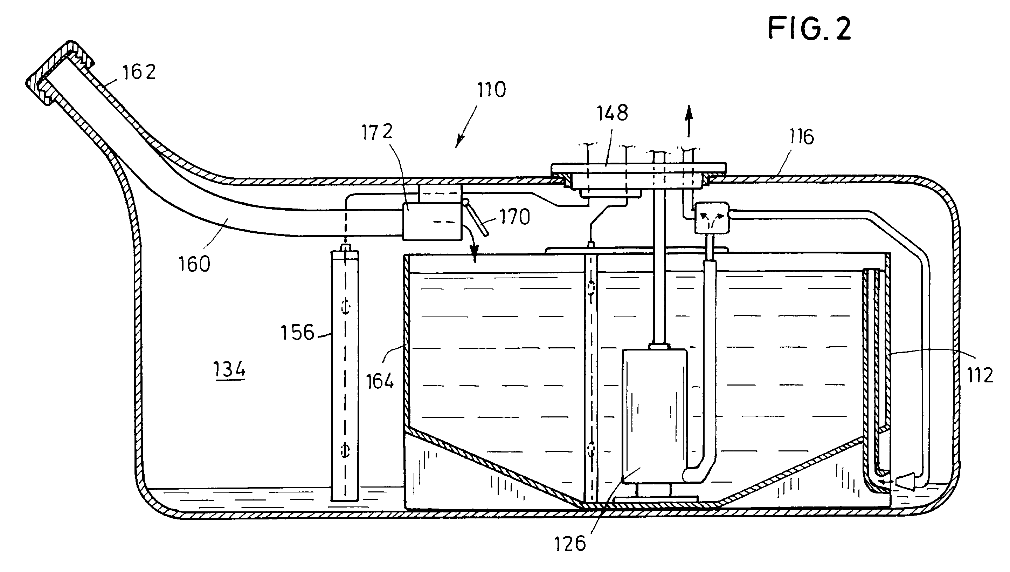

Die Ausführungsform gemäß Fig. 2 stimmt in allen wesentlichen Teilen mit der gemäß Fig. 1 überein, so daß gleiche Teile mit gleichen, jeweils um 100 höheren Bezugszeichen versehen sind. Der einzige Unterschied zwischen beiden Ausführungen besteht darin, daß das Füllrohr 160 der Ausführung gemäß Fig. 2 mit seinem ausströmseitigen Endabschnitt zwischen oberer Wandung 116 des Tanks 110 und der oberen Begrenzung des Reservoirs 112, also oberhalb des letzteren angeordnet derart ist, daß der aus dem Füllrohr 160 ausströmende Kraftstoff von oben in das Reservoir 112 fließt. Auch hier erfolgt das Füllen des das Reservoir umgebenden Raumes 134 durch Überlaufen des Kraftstoffes aus dem Reservoir 112, dessen Seitenwandungen 164 dazu, wie auch im Falle der Fig. 1, ggf. mit auf einem geeigneten Niveau angebrachten Öffnungen versehen sein können.

An der oberseitigen Wandung des Tankes 116 ist innenseitig eine Halterung 172 für den Endabschnitt des Füllrohres 160 angebracht, das ebenfalls durch eine Klappe 170 verschließbar ist. Auch bei dieser Ausführungsform gelangt der gesamte durch das Füllrohr 160 fließende Kraftstoff unabhängig von der Fließgeschwindigkeit und der Kraftstoffmenge zunächst in das Reservoir 112, so daß dieses immer als erstes gefüllt wird.

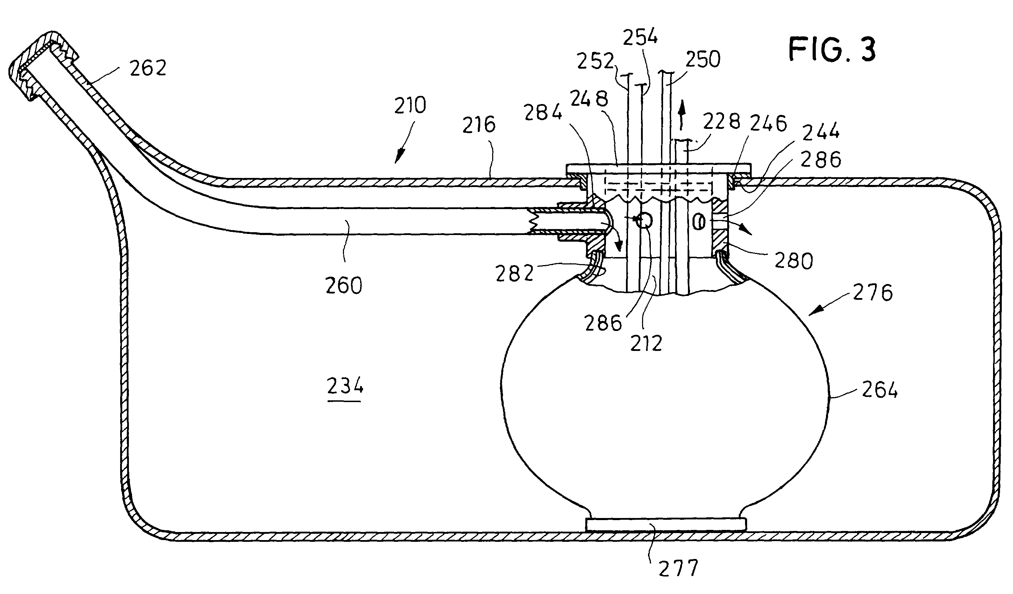

In Fig. 3 ist eine Ausführungsform dargestellt, die ebenfalls in wesentlichen Teilen mit jener gemäß Fig. 1 übereinstimmt, so daß gleiche Teile auch mit gleichen, jeweils um 200 höheren Bezugszeichen versehen sind.

Der wesentliche Unterschied gegenüber den Ausführungsformen gemäß Fig. 1 und 2 besteht darin, daß das Reservoir Teil einer Fördereinheit 276 ist, die durch eine öffnung 244 in der oberen Wandung 116 des Tankes 210 eingeführt wird, wobei der Querschnitt der Fördereinheit 276 zunächst dem der Öffnung 244 bzw. der Öffnung eines zwischengeschalteten Dichtringes 246 entspricht. Die das Reservoir begrenzende Wandung 264 kann zum Einführen in den Tank verformbar ausgebildet sein, so daß die Fördereinheit 276, nachdem sie zumindest teilweise in den Tank 210 durch die öffnung 244 eingeführt worden ist, zwecks Vergrößerung des Volumens des Reservoirs durch Verkürzung des Abstandes zwischen den stirnseitigen, aus festem Material bestehenden Begrenzungsteilen 277, 248 des Reservoirs eine radiale Vergrößerung erfährt. In Fig. 3 ist das Reservoir der Fördereinheit 276 in seiner endgültigen Form, die es normalerweise während der gesamten Lebensdauer des Tanksystems beibehält, dargestellt. Auch hier befindet sich die nicht dargestellte Pumpe innerhalb des Reservoirs 212. Die Verbindungsleitungen sind durch das obere Begrenzungsteil 248 hindurchgeführt, das auch zugleich den Verschluß für die Öffnung 244 in der Tankwandung 216 bildet.

Der Tank 210 ist mit einem Füllrohr 260 versehen, welches sich vom Einfüllstutzen 262 bis zur Fördereinheit 276 bzw. dem Reservoir 212 derselben erstreckt. Dazu ist das obere Begrenzungsteil 248 aus starrem Material mit einem rohrförmigen Fortsatz 280 versehen, der im wesentlichen koaxial zur Öffnung 244 verläuft und unterseitig mit einem die Wandung des Reservoirs begrenzenden elastischen Schlauchabschnitt 264 und einem innerhalb desselben befindlichen ebenfalls elastisch verformbarem Stützgerüst 282 verbunden ist. Der rohrförmige Fortsatz 280 weist ein Loch 284 auf, welches das ausströmseitige Ende des Füllrohres 260 aufnimmt, so daß beim Befüllen des Tankes 210 der durch das Füllrohr zugeführte Kraftstoff zunächst in das Reservoir 212 strömt. Auch hier ist somit eine Gewähr dafür gegeben, daß auch dann, wenn nur eine kleine Kraftstoffmenge in den Tank eingefüllt wird, diese sich innerhalb des Reservoirs 212 und somit im Bereich der Ansaugöffnung der Pumpe befindet.

Der rohrförmige Fortsatz 280 ist mit zusätzlichen Löchern 286 versehen, durch welche während des Betankens bei gefülltem Reservoir überschüssiger Kraftstoff aus letzterem in den umgebenden Bereich 230 des Kraftstofftankes abfließen kann. Diese zusätzlichen Löcher 286 sind zweckmäßigerweise so angeordnet, daß sie der Austrittsöffnung des Füllrohres nicht gegenüberliegen und damit von dem aus dem Füllrohr austretenden Kraftstoff nicht unmittelbar angeströmt werden und letzterer zunächst in das Reservoir 212 umgelenkt wird.

## Patentansprüche

1. Kraftstofftank für ein Kraftfahrzeug mit einem innerhalb des Kraftstofftanks (10; 110; 210) angeordnetem Reservoir (12; 112; 212), dem eine motorisch angetriebene Pumpe (26; 126), mittels welcher der Kraftstoff dem Motor zugeführt wird, zugeordnet ist, und einem Füllrohr (60; 160; 260), durch welches der Kraftstoff in den Tank einströmt, **dadurch gekennzeichnet,** daß das auslaufseitige Ende des Füllrohres (60; 160; 260) und das Reservoir (12; 112; 212) so zueinander angeordnet sind, daß zumindest ein Teil des durch das Füllrohr strömenden Kraftstoffes direkt in das Reservoir geführt wird, welches so ausgebildet ist, daß zumindest der untere Bereich des Reservoirs gegenüber dem umgebenden Innenraum (34; 134; 234) des Kraftstofftankes flüssigkeitsdicht abgeschlossen ist.

2. Kraftstofftank nach Anspruch 1, **dadurch gekennzeichnet,** daß das auslaufseitige Ende des Füllrohres (60; 260) direkt in das Reservoir (12; 212) einmündet.

3. Kraftstofftank nach Anspruch 1, **dadurch gekennzeichnet,** daß das auslaufseitige Ende des Füllrohres (160) oberhalb des oben offenen Reservoirs (112) angeordnet ist.

4. Kraftstofftank nach Anspruch 1, **dadurch gekennzeichnet,** daß das auslaufseitige Ende des Füllrohres (60; 160; 260) mit einem Verschluß (70; 170; 270) versehen ist, der unter der Wirkung des das Füllrohr durchströmenden Kraftstoffes sich öffnet.

5. Kraftstofftank nach Anspruch 4, **dadurch gekennzeichnet,** daß der Verschluß als Klappe (70; 170) ausgebildet ist.

6. Kraftstofftank nach Anspruch 1, **dadurch gekennzeichnet,** daß das Reservoir (12; 112; 212) einen Überlauf aufweist, über welchen Kraftstoff aus dem Reservoir bei Überschreiten einer bestimmten im Reservoir befindlichen Kraftstoffmenge in den das Reservoir (12; 112; 212) umgebenden Raum (34; 134; 234) übertritt.
